# EUROPEAN PATENT APPLICATION

(11) **EP 0 867 573 A2**
(43) Date of publication of application: **30.09.1998**
(21) Application number: 97303865.6
(22) Date of filing: 05.06.1997
(51) Int. Cl.: E04B 1/94, E04C 2/16

(54) **A fireproof board for all purposes**

(30) Priority: 27.03.1997 GB 9706479
(71) Applicant: REP TECHNOLOGY LIMITED, St Michael (BB)
(72) Inventor: Yu, Feng Ce, Changchun (CN)
(74) Representative: Findlay, Alice Rosemary

(57) **Abstract**

A board is disclosed as comprising magnesium oxide and magnesium chloride which collectively constitute between 20% and 60% of the total volume of the board, and at least one organic filler material constituting between 20% and 80% of the total volume of the board. The filler material comprises sawdust material, kiln dust and ashes.

## Description

This invention relates to a board and, in particular, a board with fireproof property.

A number of boards and panel members already exist for use in the building industry, namely solid wood boards, plywood boards, hard-boards, medium density fibre boards (MDF), particle boards, straw boards, oriented strand boards (OSB), gypsum boards and fibre-cement boards, but none of these is fireproof or fire preventive.

It is the object of this invention to produce an eco-friendly, non-combustible board of a thickness of 1.5mm to 36mm for fire protection and fire prevention.

In accordance with the invention, the board is made partly of magnesium oxide and partly of magnesium chloride, and such magnesium compounds collectively constitute between 20% and 60% of the total volume of the board.

The board may also conveniently be made of at least one organic filler material.

The filler may advantageously be sawdust material, kiln dust and/or ashes.

Preferably the board according to the invention may be made substantially from waste materials, and in particular industrial waste and agricultural waste.

Suitably, the magnesium compounds may comprise between 40% and 60% of the total volume of the board, whilst the filler material, admixture and water provide between 20% and 40% of the total volume of the board.

The sawdust material meanwhile may suitably provide between 10% and 30%, kiln dust may provide between 5% and 10%, and ashes may provide between 5% and 15%, of the volume of the board.

Preferably the board may be at least 1 foot wide, and even more preferably at least 3 feet wide, and most preferably at least 4 feet wide.

Suitably the board may be at least 4 feet long, preferably 6 feet long, and more preferably 8 feet long.

Suitably, the board may be at least 1.5 mm thick, preferably 3mm-9mm thick, and more preferably 12mm-19mm thick (up to a maximum of 36mm thick).

Such a non-combustible board is particularly advantageous in that it is fireproof, decay-resistant, moisture-resistant, sound-proof, corrosion-resistant, heat-insulating, impact-resistant, termite-resistant, fungi-repellent and non-deforming.

The board is also safe to use, in that, it does not include any toxic glues, asbestos or other potentially harmful materials.

The board, in accordance with the invention, is also easy to use, in that it can be sawn, drilled, nailed, screwed, foiled, wallpapered, veneered, fabricated, varnished and painted, and furthermore it has a full range of thicknesses - from 1/16" (1.5mm) to 1½" (36mm).

The board, in accordance with the invention, is also strong, tough and durable with reinforcement of fibreglass meshes and it can be used as underlayment for ceramic tiles.

The invention will now be described by way of example with reference to the following drawing which shows a board in accordance with the invention.

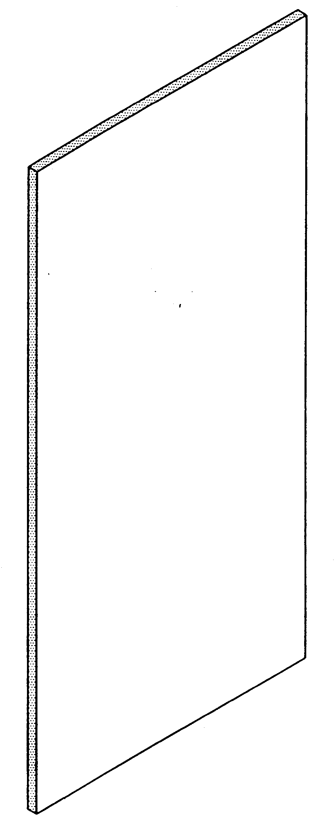

The drawing to this application shows a board or panel member (either 3 feet x 6 feet or 4 feet x 8 feet in size), preferably for use in building construction, renovation, car-fitting and ship-building, which is made from a mixture of magnesium compounds (such as magnesium oxide and magnesium chloride) and waste materials, such as agri-waste, sawdust, kiln dust, ashes, etc.

Suitably, the magnesium materials may comprise between 40% and 60%, whilst the agri-waste may comprise between 15% and 30%, the sawdust between 10% and 30%, nylon or fibreglass material between 5% and 10%, the ashes between 5% and 10% and admixture and water between 10% and 25%, of the total volume of the board.

The board is odourless, toxin-free and is strong, tough and durable, lasting up to an estimated 50 years. The board is safe to use, and easy to use like wood. One can work on it like wood, i.e. saw, drill, screw, staple, glue. It is better and more useful than wood, having excellent nail-holding ability but no lumber defects, such as cracking, splintering, peeling, delaminating, or becoming brittle. The board is fire-proof, moisture-resistant, decay-resistant, sound-proof, corrosion-resistant, heat-insulating, impact-resistant, termite-repellent, fungi-repellent and free of deformation and warpage.

The board is environmentally-friendly, as it eliminates the polluting waste, such as agri-waste, sawdust, kiln dust, ashes to save trees.

In particular, the board is fireproof since it is absolutely non-combustible, classified as incombustible materials, Class A; decay-resistant since it does not rot in dry or wet environment; moisture-resistant since it resists moisture in wet areas; sound-proof since it provides excellent acoustic insulation; corrosion-resistant since it never corrodes in salt water, alkalies, or undiluted acids; heat-insulating since it provides heat insulation and conserves energy; impact resistant since it withstands abrasion or heavy impact; termite-resistant since it prevents rodent, insect and termite attacks; fungi-repellent since it eliminates damage from fungi; non-deforming since it does not deform or warp; safe to use since it contains no asbestos, urea/phenol formaldehyde, isocyanate polyurethene or toxic resins; easy to use like wood since it can be cut, sawn, drilled, screwed, stapled, glued, taped, foiled, wallpapered, veneered, fabricated, varnished, painted and with superb nail-holding ability; and is better than wood since it never cracks, splinters, peels, delaminates or becomes brittle.

The board is more useful than wood since it is versatile and its usage is extremely wide, incombustible, strong and durable. The board according to the invention is particularly suitable for partitions, ceilings, interior walls, drywalls, fire walls, fire doors, lift shaft/stairwell liners, soffits, air-conditioning duct covering, electric conduit liners, plenum ceilings, core board for raised floors, wall-lining for elevators, garages, car repairers, gas stations or machine rooms; roof-decks, soundproof walls, thermal barriers, etc. The board is also good as ceramic tile underlayment in wet environment. The board with a thickness of less than 6mm is also adaptable to round columns, intricate architectural styles, and the board is strong and durable since it can last up to an estimated 50 years, maintenance free. Finally, it is eco-friendly since it eliminates the polluting and hazardous waste such as kiln dust, ashes, sawdust, agri-waste, etc to save trees.

The following Table 1 shows comparisons between the board in accordance with the invention, and other board or panel materials:-

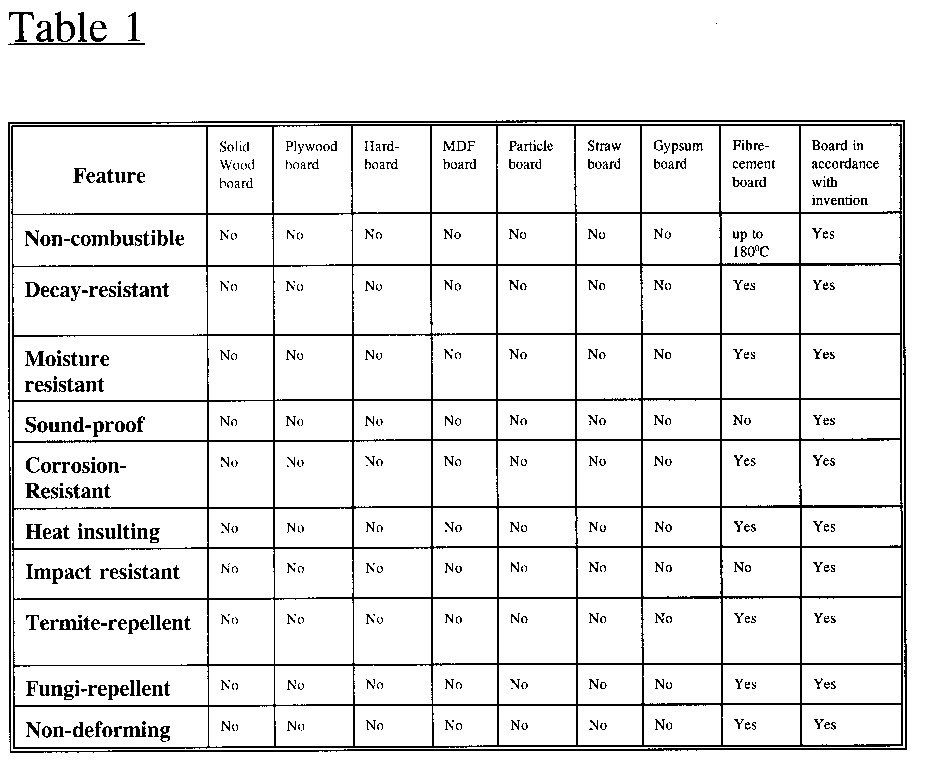

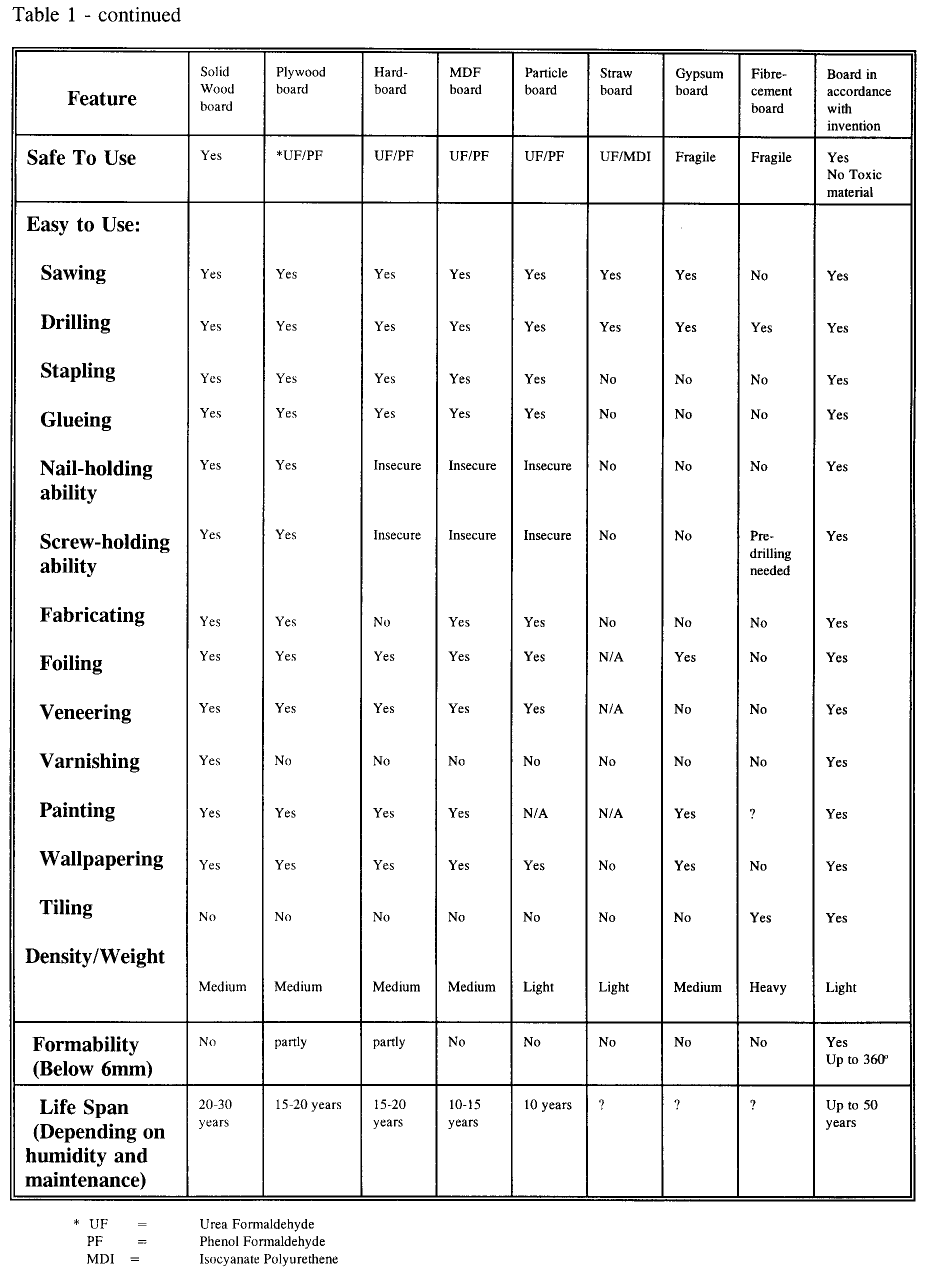

**Table 2**

| Test | Test Standard | Test Result |
|---|---|---|
| Fire Resistance¹ | GB 9978 | 180 minutes |
| Non-Combustibility² | GB 8624 | Non-combustible Material, Class A |

| | | |
|---|---|---|
| 1. Certified by National Centre for Quality Supervision and Testing of Fire Protection Equipment | | |
| 2. Certified by National Centre for Quality Supervision and Testing of Fire Resistant Building Materials | | |

The various thicknesses, weights, sizes, textures and millings of the board are shown in the following specifications.

### SPECIFICATIONS

| | | | | | | | |
|---|---|---|---|---|---|---|---|
| **Thickness:** | 2mm | 4mm | 6mm | 9mm | 12mm | 16mm | 19mm - 36mm |
| **Weight in lbs per sq ft:** | 0.6 | 0.8 | 1.1 | 1.4 | 1.8 | 2.2 | 2.5 |

- **Sheet Size:**: Standard size - 4' x 8' (1220 x 2440 mm), or any custom-cut sizes
- **Texture:**: Smooth + Matt surface
- **Colour**: Ivory White
- **Milling:**: Square Edge Tapered Edge

The board in accordance with the invention is produced by a production method, using asbestos-free materials, such as magnesium compounds, industrial and agricultural waste as basic ingredients, in a sheet form of about 54" width, and any desired length. The board is of a standard size of 4 ft x 8 ft, and sheets of any custom-cut sizes can also be made as required.

The board is the world's first to use special technique and formulae to produce non-combustible, lightweight boards of such a wide range of sizes and thicknesses by homogenising the various inorganic and organic ingredients and waste materials to make the board tough, strong, bendable, nail-holding, withstanding heavy impact and intensive heat of over 1,000°C for fire protection.

All other panel materials are produced by a pressing system, using wood-based or straw-based raw materials or fibre-cement to be compressed into panel/board form with toxic glues, such as urea/phenol formaldehyde, MDI resin, etc.

The board in accordance with the invention can be used in numerous applications in building construction, renovation, car-fitting and ship-building

For example, the board can be used in the following industries:-

### a) Construction. Renovation

The board is a basic necessity for any place where fire protection is essential-offices, banks, shopping malls, department stores, supermarkets, cinemas, restaurants, karaoke, night clubs, jewellery or goldsmith shops, off-course betting centers, schools, hospitals, dormitories, gymnasiums, recreation, sports centers, carparks, hi-rise residential buildings, etc. Incombustible, strong and durable, the board is particularly suitable for partitions, ceilings, interior walls, drywalls, fire walls, fire doors, lift shaft/stairwell liners, soffits, air-conditioning duct covering, electric conduit liners, plenum ceilings, core board for raised floors, wall-lining for elevators, garages, car repairers, gas stations or machine rooms; roof-decks, soundproof walls, thermal barriers etc. The board is also good as ceramic tile underlayment in wet environment. The board is thin enough to be substrate for decorative laminates and thick enough for fire walls.

### b) Shipping

The board's fireproof, soundproof and lightweight characteristics make it particularly suitable for fire-preventive partitions, linings and ceilings for cabins of all type of vessels, especially cruise ships, yachts, hydrofoils, ferries, oil tankers and naval ships.

### (c) Land Transport

The board is ideal for fire-protecting linings, flooring and body for cars, buses, trams, trucks, trailers, mobile homes, ambulances, trains, underground rail system, railcars, and particularly for oil trucks and flammable goods trucks. etc.

### (d) Air Transport

The board is ideal for fire protective lining for plane cabins and cargo holds. Baggage carrier liners. Wall-lining, ceilings, partitions, fire doors, fire Separation barriers for airports, air cargo terminals, air caterers, hangars, fuel storage, passengers waiting rooms, corridors, boarding gates, etc.

### (d) Industry

The board is also ideal for industrial wall-lining, partitions, ceilings, electric conduit liners, A/C duct covering, fume hood liners, oil, chemical pipe covering, laboratory countertops, chemical tanks overlay, flammable goods storage; fire doors, fire exits, fire separation barriers for factories, warehouses, electric sub-stations, etc. Fire protective wall, lift shaft and stairwell liners for multi-storey industrial buildings.

It is also ideal for public places, such as government and institutional buildings, airports, ocean terminals, rail stations, museums, convention centers, exhibition and Expo venues, etc.

## Claims

1. A board comprising magnesium oxide and magnesium chloride which collectively comprise between 20% and 60% of the total volume of the board, and at least one organic filler material comprising between 20% and 80% of the total volume of the board.

2. A board according to Claim 1 wherein the magnesium oxide and magnesium chloride collectively comprise between 30% and 50% of the total volume of the board.

3. A board according to Claim 1 wherein the magnexium oxide and magnesium chloride collectively comprise between 40% and 60% of the total volume of the board.

4. A board according to any of the preceding claims wherein the filler material comprises between 30% to 70% of the total volume of the board.

5. A board according to any of the preceding claims wherein the filler material comprises between 40% to 60% of the total volume of the board.

6. A board according to any of the preceding claims wherein the filler material comprises sawdust material.

7. A board according to any of the preceding claims wherein the filler material comprises kiln dust material.

8. A board according to any of the preceding claims wherein the filler material comprises ashes.

9. A board according to any of the preceding claims wherein the board further comprises at least one waste material.

10. A board according to Claim 9 wherein the waste materal comprises industrial waste.

11. A board according to Claim 7 wherein the waste material comprises agricultural waste.

12. A board according to any of the preceding claims wherein the board further comprises admixture and water.

13. A board according to any one of Claims 6 to 12 wherein the sawdust material comprises between 10% and 30% of the volume of the board.

14. A board according to any one of Claims 7 to 13 wherein the kiln dust comprises between 5% and 10% of the volume of the board.

15. A board according to any one of Claims 8 to 14 wherein the ashes comprise between 5% and 15% of the volume of the board.

16. A board according to any one of Claims 11 to 15 wherein the agricultural waste comprises between 15% and 30% of the total volume of the board.

17. A board according to any of the preceding claims wherein nylon or fibreglass material comprises between 5% and 10% of the total volume of the board.

18. A board according to any one of Claims 12 to 17 wherein the admixture and water comprise 10% and 25% of the total volume of the board.

19. A board according to any of the preceding claims wherein the board is at least 1 foot wide.

20. A board according to Claim 19 wherein the board is at least 3 feet wide.

21. A board according to Claim 20 wherein the board is at least 4 feet wide.

22. A board according to any of the preceding claims wherein the board is at least 4 feet long.

23. A board according to Claim 22 wherein the board is at least 6 feet long.

24. A board according to Claim 23 wherein the board is at least 8 feet long.

25. A board according to any of the preceding claims wherein the board is at least 1.5mm thick.

26. A board according to Claim 25 wherein the board is 3mm-9mm thick.

27. A board according to Claim 26 wherein the board is 12mm-19mm thick.

28. A board according to Claim 25 wherein the board is 20mm-36mm thick.

29. A board according to any of the above claims which is produced for fire protection by homogenising inorganic and organic materials.

30. A board according to any of the above claims which withstands a temperature of at least 1,000°C.
